# EUROPEAN PATENT APPLICATION

(11) **EP 1 793 264 A1**
(43) Date of publication of application: **06.06.2007**
(21) Application number: 06024409.2
(22) Date of filing: 24.11.2006
(51) Int. Cl.: G02F 1/1335, G02F 1/13363, G02F 1/1368

(54) **Liquid crystal display device**

(30) Priority: 05.12.2005 JP 2005351351
(71) Applicant: SEMICONDUCTOR ENERGY LABORATORY CO., LTD., Atsugi-shi, Kanagawa-ken 243-0036 (JP)
(72) Inventor: Yuji, Egi, Atsugi-shi Kanagawa-ken 243-0036 (JP); Tetsuji, Ishitani, Atsugi-shi Kanagawa-ken 243-0036 (JP); Takeshi, Nishi, Atsugi-shi Kanagawa-ken 243-0036 (JP)
(74) Representative: Grünecker, Kinkeldey, Stockmair & Schwanhäusser Anwaltssozietät

(57) **Abstract**

A problem exists in that black luminance in a liquid crystal display device when seen in a dark place is high compared to black luminance of a light emitting element in a non-light-emitting state, so as a result, contrast ratio is low. There is a high demand for contrast ratio to be improved. Therefore, it is an object of the present invention to provide a liquid crystal display device with improved contrast ratio and a wide viewing angle. Retardation films (121,122) and stacked polarizing plates (103,104,105,106) are provided over light transmitting substrates (101,102) which sandwich a display element (100). A film having liquid crystal with hybrid oriented liquid crystal, a film having liquid crystal with twisted orientation, uniaxial retardation films, or biaxial retardation films can be used as the retardation films. It is preferable that the stacked polarizing plates comprise two polarizing plates.

## Description

### BACKGROUND OF THE INVENTION

### 1. Field of the Invention

The present invention mainly relates to a display device such as a liquid crystal display device which conducts display with a high contrast ratio.

### 2. Description of the Related Art

In recent years, liquid crystal display devices have been used as televisions, and in order to show display of high quality, display devices with a wide viewing angle and a high contrast ratio have been required.

A problem with contrast ratio is that viewing angle dependence occurs. A primary factor in the occurrence of viewing angle dependence is that there is optical anisotropy between the major axis direction and the minor axis direction of liquid crystal molecules. Due to optical anisotropy, the visibility of liquid crystals molecules when looking at a liquid crystal display device front-on is different to their visibility when looking at the device from an oblique direction. Consequently, the luminance of white display and the luminance of black display change depending on the viewing angle, and viewing angle dependence of the contrast ratio occurs.

In order to ameliorate the viewing angle dependence of the contrast ratio, a structure in which a retardation film is inserted has been proposed. For example, in vertical alignment mode (VA mode), by setting up biaxial retardation films having refractive indexes which differ in three directions so as to sandwich a liquid crystal layer, the viewing angle is improved (see Non-Patent Document 1).
[Non-Patent Document 1] 'Optimum Film Compensation Modes for TN and VA LCDs', SID98 Digest, p. 315-318

Further, a structure employing stacked wide view (WV) films in which a discotic liquid crystal compound is hybrid-aligned has been proposed for twisted nematic mode (TN mode) (see Patent Document 1).
[Patent Document 1] Japanese Published Patent Application No. H 6-265728

Meanwhile, as a method for improving the contrast ratio, in order to ameliorate low contrast ratio of display which occurs due to the degree of polarization of a polarizing plate being insufficient, a structure has been proposed in which a first polarizing plate is provided on the outer side of a substrate which is on a viewing side of a liquid crystal cell, a second polarizing plate is provided on the outer side of a substrate which is opposite to the substrate on the viewing side, and a third polarizing plate is provided so that when light from an auxiliary light source provided on the outer side of the substrate which is opposite to the substrate on the viewing side is polarized through the second polarizing plate and passes through the liquid crystal cell, the degree of polarization is improved (see Patent Document 2).
[Patent Document 2] PCT International Publication No. 00/34821

### SUMMARY OF THE INVENTION

However, black luminance of a liquid crystal display device when seen in dark places is high compared with the black luminance of light emitting elements used for plasma display panels (PDP) and electroluminescence (EL) panels when they are in a non-light-emitting state. As a result, there is a problem in that the contrast ratio is low, and there is a strong need to improve the contrast ratio.

Therefore, an object of the present invention is to improve the contrast ratio of a liquid crystal display device. Further, another object of the present invention is to provide a liquid crystal display device with a wide viewing angle.

In view of the above-mentioned objects, in the present invention, retardation films and stacked polarizing plates are provided over light transmitting substrates which sandwich a display element. Preferably, a retardation film and stacked polarizing plates are provided over each of the light transmitting substrates, which are disposed opposite each other so as to sandwich the display element. Further, as the retardation film, a film having liquid crystal with hybrid orientation, a film having liquid crystal with twisted orientation, a uniaxial retardation film, or a biaxial retardation film can be used. The stacked polarizing plates preferably comprise two polarizing plates.

One aspect of the invention is a liquid crystal display device which includes a first light transmitting substrate and a second light transmitting substrate which are disposed so as to be opposite each other, a display element which is sandwiched between the first light transmitting substrate and the second light transmitting substrate, and a retardation film and stacked polarizing plates which are disposed in sequence on an outer side of the first light transmitting substrate or on an outer side of the second light transmitting substrate. The stacked polarizing plates are disposed such that their absorption axes are in a parallel nicol arrangement.

Another aspect of the invention is a liquid crystal display device which includes a first light transmitting substrate and a second light transmitting substrate which are disposed so as to be opposite each other, a display element which is sandwiched between the first light transmitting substrate and the second light transmitting substrate, a retardation film and stacked polarizing plates which are disposed in sequence on an outer side of the first light transmitting substrate, and a retardation film and a polarizing plate which are disposed in sequence on an outer side of the second light transmitting substrate. The stacked polarizing plates are disposed such that their absorption axes are in a parallel nicol arrangement.

Another aspect of the invention is a liquid crystal display device which includes a first light transmitting substrate and a second light transmitting substrate which are disposed so as to be opposite each other, a display element which is sandwiched between the first light transmitting substrate and the second light transmitting substrate, a retardation film and stacked polarizing plates which are disposed in sequence on an outer side of the first light transmitting substrate, and a retardation film and stacked polarizing plates which are disposed in sequence on an outer side of the second light transmitting substrate. The stacked polarizing plates are disposed such that their absorption axes are in a parallel nicol arrangement, and such that the absorption axes of the polarizing plates provided on the first light transmitting substrate side are in a crossed nicol arrangement with respect to the absorption axes of the polarizing plates provided on the second light transmitting substrate side.

Another aspect of the invention is a liquid crystal display device which includes a first light transmitting substrate and a second light transmitting substrate which are disposed so as to be opposite each other, a display element which is sandwiched between the first light transmitting substrate and the second light transmitting substrate, a color filter which is provided on an inner side of the first light transmitting substrate or on an inner side of the second light transmitting substrate, a retardation film and stacked polarizing plates which are disposed in sequence on an outer side of the first light transmitting substrate, and a retardation film and stacked polarizing plates which are disposed in sequence on an outer side of the second light transmitting substrate. The stacked polarizing plates are disposed such that their absorption axes are in a parallel nicol arrangement, and such that the absorption axes of the polarizing plates provided on the first light transmitting substrate side are in a crossed nicol arrangement with respect to the absorption axes of the polarizing plates provided on the second light transmitting substrate side.

In the invention, the stacked polarizing plates preferably comprise two polarizing plates.

In the invention, the retardation film is a film having liquid crystal with hybrid orientation, a film having liquid crystal with twisted orientation, a uniaxial retardation film, or a biaxial retardation film.

In the invention, the first light transmitting substrate has a first electrode, the second light transmitting substrate has a second electrode, and the display device conducts white display when a voltage is applied between the first electrode and the second electrode and conducts black display when a voltage is not applied between the first electrode and the second electrode.

In the invention, the first light transmitting substrate has a first electrode, the second light transmitting substrate has a second electrode, and the display device conducts white display when a voltage is not applied between the first electrode and the second electrode and conducts black display when a voltage is applied between the first electrode and the second electrode.

According to the present invention, the contrast ratio of a liquid crystal display device can be improved. At the same time, the viewing angle can be improved by the retardation film.

### BRIEF DESCRIPTION OF DRAWINGS

FIG. 1 is experimental results which show contrast ratio for structures of the invention.
FIG. 2 is experimental results which show contrast ratio for structures of the invention.
FIG. 3 is experimental results which show viewing angle dependence of a structure having a polarizing plate.
FIG. 4 is experimental results which show viewing angle dependence of a structure of the invention.
FIG. 5 is experimental results which show viewing angle dependence of a structure of the invention.
FIG. 6 is experimental results which show contrast ratio of structures of the invention.
FIG. 7 is experimental results which show contrast ratio of structures of the invention.
FIG. 8 is experimental results which show viewing angle dependence of a structure having a polarizing plate.
FIG. 9 is experimental results which show viewing angle dependence of a structure of the invention.
FIG. 10 is experimental results which show viewing angle dependence of a structure of the invention.
FIGS. 11A and 11B are a cross-sectional diagram and a perspective view showing a liquid crystal display device of the invention.
FIG. 12 is a cross-sectional diagram showing a liquid crystal display device of the invention.
FIG. 13 is a cross-sectional diagram showing a liquid crystal display device of the invention.
FIGS. 14A to 14C are block diagrams showing a liquid crystal display device of the invention.
FIGS. 15A to 15D are cross-sectional diagrams showing an irradiation means of a liquid crystal display device of the invention.
FIGS. 16A and 16B are cross-sectional diagrams showing a liquid crystal mode of the invention.
FIGS. 17A and 17B are cross-sectional diagrams showing a liquid crystal mode of the invention.
FIGS. 18A and 18B are cross-sectional diagrams showing a liquid crystal mode of the invention.
FIGS. 19A and 19B are cross-sectional diagrams showing a liquid crystal mode of the invention.

### DETAILED DESCRIPTION OF THE INVENTION

Embodiment modes of the invention will be explained with reference to the drawings. Note that it is easily understood by those skilled in the art that the invention is not limited to the following descriptions, and various changes may be made in form and details without departing from the spirit and the scope of the invention. Therefore, the invention should not be construed as being limited to the descriptions of the embodiment modes below. Note that in the drawings, parts which are the same or which have similar functions are denoted by the same reference numerals or symbols, and repetitious explanation thereof is omitted.

Embodiment Mode 1
In this embodiment mode, the concept of a liquid crystal display device of the invention will be explained.

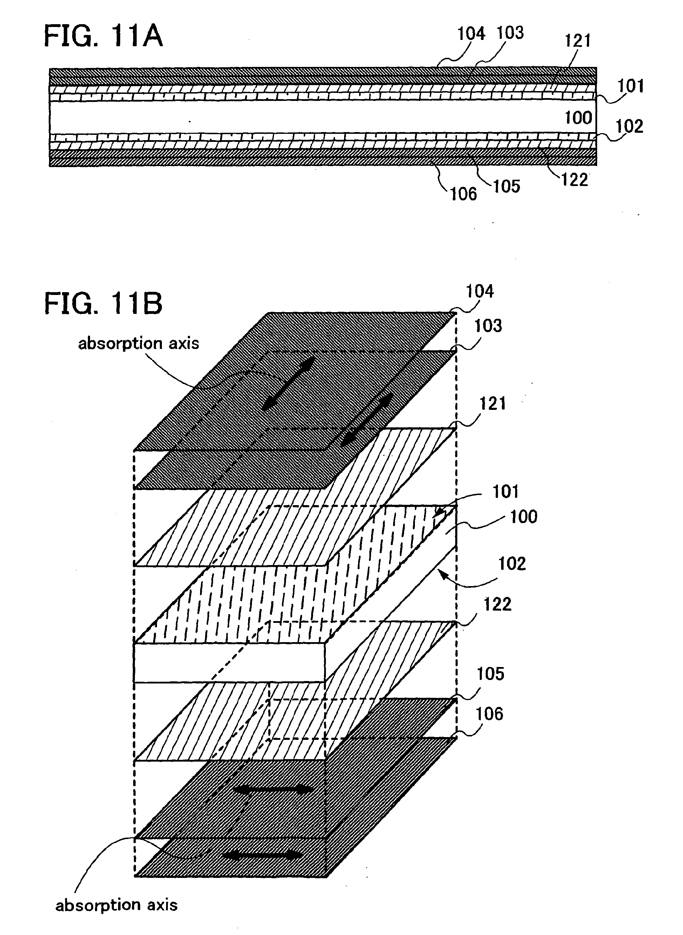

FIG. 11A shows a cross-section of a display device provided with stacked polarizing plates, and FIG. 11B shows a perspective view of the display device. In this embodiment mode, explanation will be given using a liquid crystal display device having a liquid crystal element as a display element as an example.

As shown in FIG. 11A, a layer 100 having a liquid crystal element which functions as a display element is sandwiched between a first light transmitting substrate 101 and a second light transmitting substrate 102 which are disposed so as to be opposite each other. As a light transmitting substrate, a glass substrate such as barium borosilicate glass or alumino-borosilicate glass, a quartz substrate, or the like can be used. Alternatively, a substrate formed from a synthetic resin having flexibility, such as a plastic, typified by polyethylene terephthalate (PET), polyethylene naphthalate (PEN), and polyether sulfone (PES), or an acrylic, can be used as a light transmitting substrate.

On an outer side of the light transmitting substrates, that is, on a side which is not in contact with the layer having the liquid crystal element, a retardation film and stacked polarizing plates are provided in sequence. On the first light transmitting substrate 101 side, a first retardation film 121, a first polarizing plate 103, and a second polarizing plate 104 are provided in sequence. On the second light transmitting substrate 102 side, a second retardation film 122, a third polarizing plate 105, and a fourth polarizing plate 106 are provided in sequence.

The polarizing plates can be formed from a known material. For example, a structure can be used in which a bonding layer, TAC (triacetyl cellulose), a mixed layer of PVA (polyvinyl alcohol) and iodine, and TAC are stacked in sequence over the substrate. The degree of polarization can be controlled by the mixed layer of PVA (polyvinyl alcohol) and iodine. A polarizing plate is sometimes referred to as a polarizing film, due to its shape.

The retardation film may be, for example, a film hybrid oriented liquid crystal, a film having liquid crystal with twisted orientation, a uniaxial retardation film, or a biaxial retardation film. Such retardation films can widen the viewing angle of the display device.

A uniaxial retardation film is formed by stretching a resin in one direction. Further, a biaxial retardation film is formed by stretching a resin into an axis in a crosswise direction, then gently stretching the resin into an axis in a lengthwise direction. Examples of a resin that can be used are a cycloolefin polymer (COP), polycarbonate (PC), polymethyl methacrylate (PMMA), polystyrene (PS), polyether sulfone (PES), polyphenylene sulfide (PPS), polyethylene terephthalate (PET), polyethylene naphthalate (PEN), polypropylene (PP), polyphenylene oxide (PPO), polyarylate (PAR), polyimide (PI), and polytetrafluoroethylene (PTFE).

Note that the film having liquid crystal with hybrid orientation is formed by using a triacetyl cellulose (TAC) film as a base and hybrid-aligning discotic liquid crystals or nematic liquid crystals. A retardation film can be attached to a light transmitting substrate after being attached to a polarizing plate.

Next, as can be seen in the perspective view shown in FIG. 11B, the first polarizing plate 103 and the second polarizing plate 104 are stacked such that an absorption axis of the first polarizing plate 103 is parallel with an absorption axis of the second polarizing plate 104. This parallel arrangement is referred to as 'parallel nicol'. Similarly, the third polarizing plate 105 and the fourth polarizing plate 106 are stacked such that an absorption axis of the third polarizing plate 105 is parallel with an absorption axis of the fourth polarizing plate 106, that is, such that they are in a parallel nicol arrangement.

The polarizing plates stacked thus are disposed such that they are in a parallel nicol arrangement.

The stacked polarizing plates which are opposite each other are disposed such that their absorption axes are at right angles to each other. This orthogonal arrangement is referred to as 'crossed nicol' or 'cross nicol'.

Note that a special characteristic of the polarizing plates is that they have a transmission axis in a direction at right angles to the absorption axis. Therefore, when the transmission axes of the polarizing plates are parallel to each other, this can also be referred to as 'parallel nicol'. Further, when the transmission axes of the polarizing plates are at right angles to each other, this can also be referred to as 'crossed nicol'.

By layering the stacked polarizing plates such that their absorption axes are in a parallel nicol arrangement, light leakage in the absorption axis direction can be lowered. Further, by disposing opposing stacked polarizing plates such that their absorption axes are in a crossed nicol arrangement, light leakage can be lowered, compared to a crossed nicol arrangement of single-layer polarizing plates. Consequently, contrast ratio of the display device can be improved.

Furthermore, since the invention has a retardation film, a display device with a wide viewing angle can be provided. Further, when a quarter wave plate is used as a retardation plate, the retardation plate also functions as an anti-reflection film.

### [Embodiment Mode 2]

In this embodiment mode, a specific structure of a liquid crystal display device will be explained.

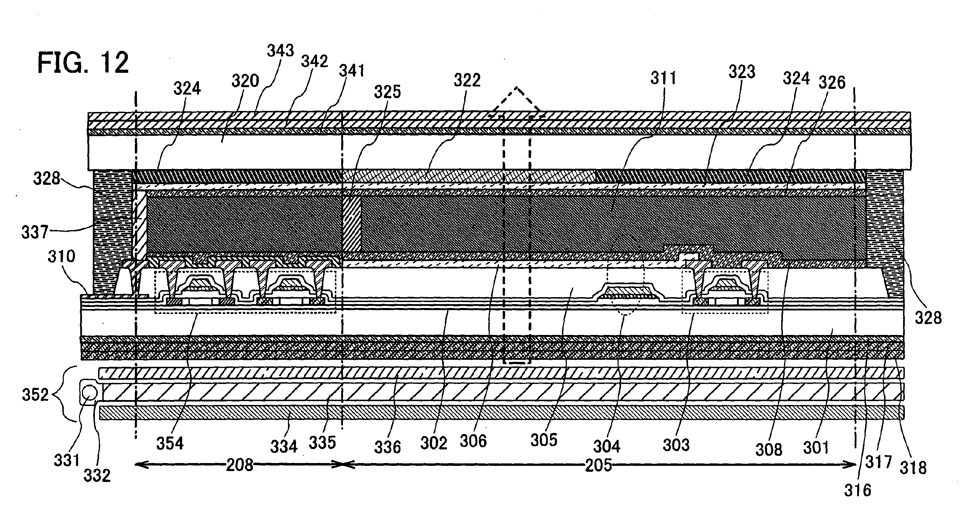

FIG. 12 is a cross-sectional diagram of a liquid crystal display device provided with stacked polarizing plates.

A liquid crystal display device includes a pixel portion 205 and a driver circuit portion 208. In the pixel portion 205 and the driver circuit portion 208, a base film 302 is provided over a substrate 301. An insulating substrate similar to the one in the preceding embodiment mode can be used as the substrate 301. Further, generally there is a concern that a substrate formed from a synthetic resin has a low allowable temperature limit compared to other substrates. However, it is possible to employ a substrate formed from a synthetic resin by transposing substrates after a manufacturing process using a substrate with high heat resistance.

In the pixel portion 205, a transistor which functions as a switching element is provided over the base film 302. In this embodiment mode, a thin film transistor (TFT) is used as the transistor, and is referred to as switching TFT 303. The TFT can be manufactured by various methods. For example, as an active layer, a crystalline semiconductor film may be used. Over the crystalline semiconductor film, a gate electrode is provided with a gate insulating layer therebetween. The gate electrode can be used to dope the active layer with an impurity element. Because the gate electrode is used to dope the active layer with an impurity element, there is no need to form a mask for doping with an impurity element. The gate electrode can have a single-layer structure or a stacked-layer structure. By controlling the concentration of an impurity region, a heavily-doped impurity region and a lightly-doped impurity region can be formed. Such a TFT having a lightly-doped impurity region is referred to as an LDD (Lightly Doped Drain) structure. Further, the lightly-doped impurity region can be formed so as to overlap with the gate electrode, and this kind of TFT is referred to as a GOLD (Gate Overlapped LDD) structure. FIG. 12 shows the switching TFT 303 having a GOLD structure. Further, the switching TFT 303 is formed to have an n-type polarity by using phosphorus (P) or the like in an impurity region. In a case where the switching TFT 303 is formed to have a p-type polarity, an impurity region may be doped with boron (B) or the like. Subsequently, a protective film which covers the gate electrode and the like is formed. Dangling bonds of the crystalline semiconductor film can be terminated by a hydrogen element mixed in the protective film. Furthermore, to improve planarity, an interlayer insulating film 305 may be formed. For the interlayer insulating film 305, an organic material or an inorganic material, or a stacked structure of these materials can be used. Further, apertures are formed in the interlayer insulating film 305, the protective film, and the gate insulating film, to form a wire which is connected to the impurity region. In this manner, the switching TFT 303 can be formed. Note that the invention is not limited to the structure of the switching TFT 303.

Next, a pixel electrode 306 which is connected to the wire is formed.

Further, a capacitor element 304 can be formed at the same time as the switching TFT 303. In this embodiment mode, the capacitor element 304 is formed from a stacked body including a conductive film formed at the same time as the gate electrode, the protective film, interlayer insulating film 305, and the pixel electrode 306.

Further, by using the crystalline semiconductor film, the pixel portion and the driver circuit portion can be formed over the same substrate. In that case, the transistor of the pixel portion and the transistor of the driver circuit portion 208 are formed at the same time. The transistors used for the driver circuit portion 208 are in a CMOS circuit configuration, so they are referred to as a CMOS circuit 354. The TFTs which form the CMOS circuit 354 can have a similar configuration to the TFT 303. Further, the TFTs which form the CMOS circuit 354 can have a GOLD structure or an LDD structure. The TFTs which form the CMOS circuit 354 do not necessarily have to have a similar structure to the TFT 303.

An orientation film 308 is formed so as to cover the pixel electrode 306. The orientation film 308 is subjected to rubbing treatment. When a liquid crystal mode is employed, for example, a VA mode, there are cases when rubbing treatment is not conducted.

Next, a counter substrate 320 is prepared. On an inner side of the counter substrate 320, that is, on a side which is in contact with liquid crystals, a color filter 322 and a black matrix (BM) 324 can be provided. The color filter 322 and the black matrix (BM) 324 may be manufactured by known methods, however, by forming them by a droplet-discharge method (typically, an ink-jet method) in which a prescribed material is delivered dropwise, waste of material can be eliminated. The color filter and the like are provided in a region where the switching TFT 303 is not disposed. That is, the color filter is provided so as to be opposite a light transmissive region, in other words, an open region. Note that when the liquid crystal display device is formed to have a full-color display, the color filter and the like may be formed from materials that exhibit the color red (R), the color green (G), and the color blue (B). When the liquid crystal display device is formed to have a mono-color display, the color filter and the like may be formed from a material that exhibits at least one color.

Note that when RGB diodes (LEDs) or the like are disposed in a backlight and a successive additive color mixture method (a field sequential method) which conducts color display by time division is employed, there are cases when a color filter is not provided. The black matrix 324 is also provided to reduce the reflection of outside light by the wires of the switching TFT 303 and the CMOS circuit 354. Therefore, the black matrix 324 is provided so as to overlap with the switching TFT 303 and the CMOS circuit 354. Note that the black matrix 324 may also be provided so as to overlap with the capacitor element 304. This is because the black matrix 324 can prevent reflection by the metal film that forms the capacitor element 304.

Next, a counter electrode 323 and an orientation film 326 are provided. The orientation film 326 is subjected to rubbing treatment. In the case of a particular liquid crystal mode, there are cases when the rubbing treatment is not conducted. For example, in the case of a VA mode, rubbing does not have to be conducted.

The wires and gate electrodes of the TFTs, the pixel electrode 306, and the counter electrode 323 can be formed from materials selected from among the group consisting of indium tin oxide (ITO), IZO (indium zinc oxide) in which zinc oxide (ZnO) is mixed with indium oxide, conductive materials in which silicon oxide (SiO₂) is mixed with indium oxide, organoindium, organotin, metals such as tungsten (W), molybdenum (Mo), zirconium (Zr), hafnium (Hf), vanadium (V), niobium (Nb), tantalum (Ta), chromium (Cr), cobalt (Co), nickel (Ni), titanium (Ti), platinum (Pt), aluminum (Al), and copper (Cu), alloys containing such metals, and metal compounds containing such metals.

The counter substrate 320 is bonded to the substrate 301 using a sealing material 328. The sealing material 328 can be applied over the substrate 301 or the counter substrate 320 using a dispenser or the like. Further, in order to maintain the space between the substrate 301 and the counter substrate 320, spacers 325 are provided in a part of the pixel portion 205 and the driver circuit portion 208. The spacers 325 are pillar-shaped or globe-shaped.

Liquid crystals 311 are injected between the substrate 301 and the counter substrate 320 which have been bonded in this manner. The injection is preferably conducted in a vacuum. Alternatively, the liquid crystals 311 may be formed by a method other than injection. For example, the liquid crystals 311 may be delivered dropwise onto one substrate 301, and then the counter substrate 320 may be bonded. Such a dropping method is preferably used when dealing with a large-sized substrate, when it is difficult to use an injection method.

The liquid crystals 311 have liquid crystal molecules, and a tilt of the liquid crystal molecules is controlled by the pixel electrode 306 and the counter electrode 323. Specifically, the tilt is controlled by voltage which is applied to the pixel electrode 306 and the counter electrode 323. Such control uses a control circuit which is provided in the driver circuit portion 208. Note that the control circuit does not necessarily have to be formed over the substrate 301, and a circuit connected by a connection terminal 310 may be used. In that case, an anisotropic conductive film having conductive particles can be used to connect the circuit to the connection terminal 310. Alternatively, the counter electrode 323 may be electrically connected to a portion of the connection terminal 310 and the connection terminal 310 may have a common potential with the counter electrode 323. For example, electrical connection can be obtained by using a bump 337. The display element is sandwiched between the substrate 301 and the counter substrate 320, and includes the liquid crystals 311. In the case of an active matrix display device such as the one shown in FIG. 12, the display element also includes the switching TFT 303.

Next, a structure of a backlight unit 352 will be explained. As a light source 331 which emits fluorescence, the backlight unit 352 includes a cold-cathode tube, a hot-cathode tube, a diode, inorganic EL, or organic EL. The backlight unit 352 also includes a lamp reflector 332 for efficiently guiding the fluorescence to a light guide plate 335, which guides light to an entire surface while totally reflecting the fluorescence, a diffusion plate 336 for decreasing unevenness in brightness, and a reflector plate 334 for reusing light which has leaked under the light guide plate 335.

A control circuit for adjusting luminance of the light source 331 is connected to the backlight unit 352. Luminance of the light source 331 can be controlled by signal supply from the control circuit.

Between the substrate 301 and the backlight unit 352, a retardation film 316 and stacked polarizing plates 317 and 318 are provided in sequence from the substrate side. Further, on the counter substrate 320 side, a retardation film 341 and stacked polarizing plates 342 and 343 are provided in sequence from the substrate side. The stacked polarizing plates and the retardation film can be bonded together and then attached to the substrates 301 and 320. At that time, the stacked polarizing plates which are opposite each other are bonded such that they are in a crossed nicol arrangement.

By providing the stacked polarizing plates, contrast ratio can be improved. Further, because of the retardation film, a display device with a wide viewing angle can be provided. Moreover, when a quarter wave plate is used as a retardation plate, the retardation plate also functions as an anti-reflection film.

Further, this embodiment mode was described with reference to a display device having a liquid crystal element, however the invention can also be applied to a light emitting device having a self-light-emitting element. In a light emitting device, when a structure is used in which a pair of opposing substrates are light transmitting substrates and light is emitted towards both directions, contrast ratio can be improved by providing stacked polarizing plates on the outer side of each substrate. Compared to a liquid crystal display device, a light emitting device can be a display device which has a faster moving-image response speed and is thinner.

Embodiment Mode 3 This embodiment mode includes stacked polarizing plates, but differs from the previous embodiment modes in that explanation is given of a liquid crystal display device employing a TFT having an amorphous semiconductor film.

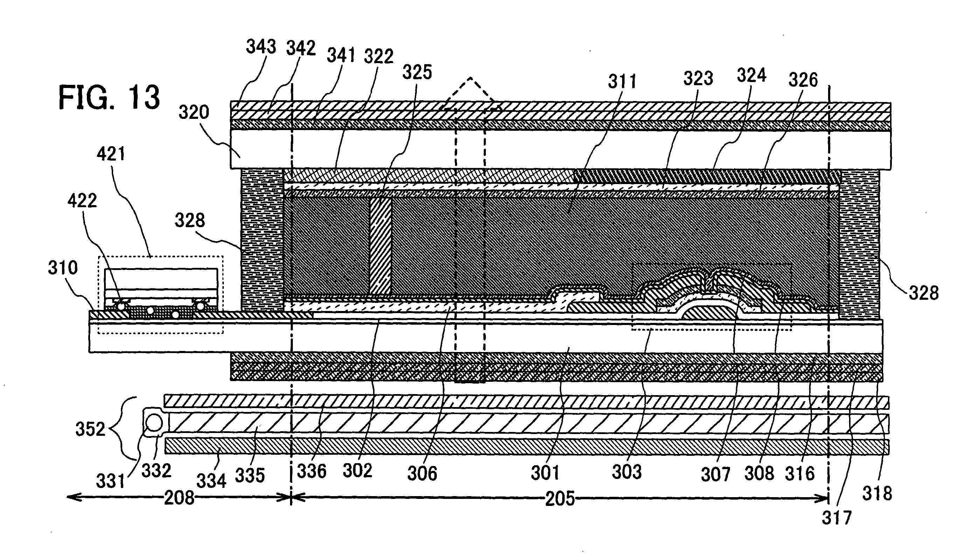

FIG. 13 shows a structure of a liquid crystal display device provided with a transistor employing an amorphous semiconductor film (hereinafter referred to as an 'amorphous TFT') as a switching element. A switching TFT 303 formed from an amorphous TFT is provided in a pixel portion 205. The amorphous TFT can be formed by a known method. However, for example, in the case of a channel-etch type TFT, a gate electrode is formed over a base film 302, and a gate insulating film, an n-type semiconductor film, an amorphous semiconductor film, a source electrode, and a drain electrode are formed over the gate electrode. Using the source electrode and the drain electrode, an aperture is formed in the n-type semiconductor film. At this point, since a portion of the amorphous semiconductor film is also removed, this TFT is referred to as a channel-etch type TFT. After that, a protective film is formed. Thereby, an amorphous TFT can be formed. Further, there is also a channel-protection type amorphous TFT. A protective film is provided so that when the source electrode and drain electrode are used to form an aperture in the n-type semiconductor film, the amorphous semiconductor film is not removed. The rest of the structure can be similar to that of the channel-etch type TFT.

Then, similarly to FIG. 12, an orientation film 308 is formed, and rubbing treatment is conducted. Depending on the mode of the liquid crystal, rubbing treatment may not be conducted.

Further, similarly to FIG. 12, a counter substrate 320 is prepared, and is bonded using a sealing material 328. By enclosing liquid crystals 311 in between the substrates, a liquid crystal display device can be formed.

Further, similarly to FIG. 12, between the substrate 301 and a backlight unit 352, a retardation film 316 and stacked polarizing plates 317 and 318 are provided in sequence from the substrate side. Further, on the counter substrate 320 side, a retardation film 341 and stacked polarizing plates 342 and 343 are provided in sequence from the substrate side. The stacked polarizing plates and the retardation film can be bonded together and then attached to the substrates 301 and 320. At that time, the stacked polarizing plates which are opposite each other are bonded such that they are in a crossed nicol arrangement with respect to each other.

By providing the stacked polarizing plates, contrast ratio can be improved. Further, because of the retardation film, a display device with a wide viewing angle can be provided.

When a liquid crystal display device is formed in this manner using an amorphous TFT as the switching TFT 303, taking operating performance into consideration, an IC 421 formed from a silicon wafer can be mounted as a driver in the driver circuit portion 208. For example, by connecting a wire included in the IC 421 and a wire connected to the switching TFT 303 using an anisotropic conductor having conductive particles 422, a signal that controls the switching TFT 303 can be supplied. Note that the mounting method of the IC is not limited to this, and the IC can also be mounted by a wire bonding method.

In addition, the IC can also be connected to a control circuit through a connection terminal 310. At that time, an anisotropic conductive film having conductive particles 422 can be used to connect the IC with the connection terminal 310.

Explanation of the rest of the structure is omitted, since it is the same as that of FIG. 12.

This embodiment mode was explained with reference to a display device having a liquid crystal element, but the invention may also be applied to a light emitting device having a self-light-emitting element.

Embodiment Mode 4 In this embodiment mode, a structure of a backlight is explained. The backlight is provided in a display device as a backlight unit having a light source. The light source is surrounded by reflector plates so that the backlight unit can efficiently disperse light.

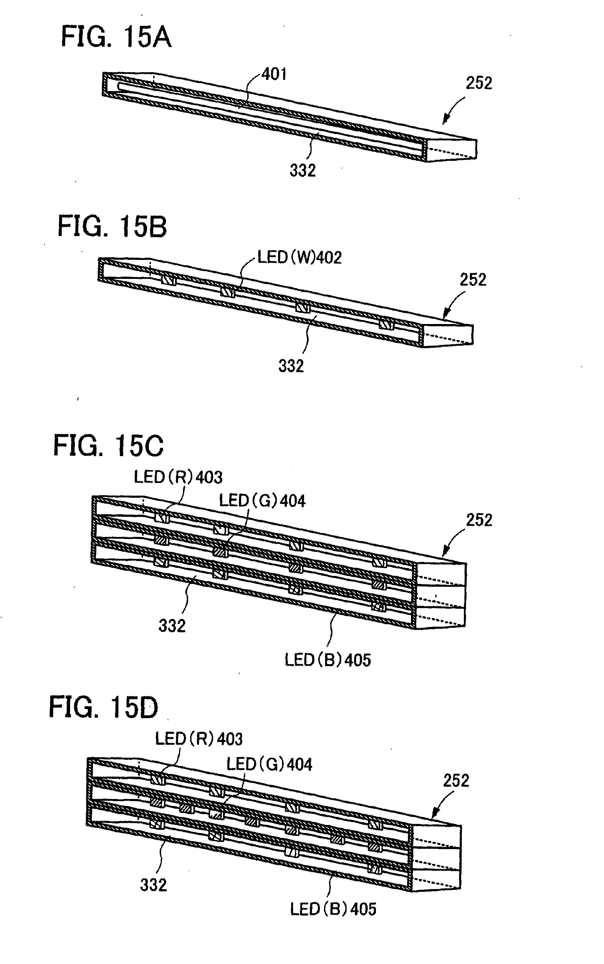

As shown in FIG. 15A, a backlight unit 252 can employ a cold-cathode tube 401 as a light source. Further, in order to efficiently reflect light which is from the cold-cathode tube 401, a lamp reflector 332 can be provided. The cold-cathode tube 401 is often used in large-sized display devices. That is because of the strength of the luminance from the cold-cathode tube. Therefore, a backlight unit including a cold-cathode tube can be used for a display of a personal computer.

As shown in FIG. 15B, the backlight unit 252 can use a diode (an LED) 402 as a light source. For example, diodes (W) 402 that emit the white light can be disposed at predetermined intervals. Further, in order to efficiently reflect light that is from the diodes (W) 402, a lamp reflector 332 can be provided.

As shown in FIG. 15C, the backlight unit 252 can employ diodes (LEDs) 403, 404, and 405 of each color, RGB, as a light source. By using diodes (LEDs) 403, 404, and 405 of each color, RGB, color reproducibility can be improved compared to when only diodes (W) 402 that emit the white light are used. Further, in order to efficiently reflect light that is from the diodes (LEDs) 403, 404, and 405, the lamp reflector 332 can be provided.

Further, as shown in FIG. 15D, when diodes (LEDs) 403, 404 and 405 of each color, RGB, are used as a light source, it is not necessary to provide the same number of diodes of each color or to dispose them in the same arrangement. For example, a plurality of diodes of a color with a low emission intensity (for example, green) may be disposed.

Further, the diode 402 that emits the white light may be combined with the diodes (LEDs) 403, 404 and 405 of each color, RGB.

Note that when RGB diodes are provided, when a field sequential mode is used, color display can be conducted by activating the RGB diodes in sequence according to time.

When diodes are employed, since luminance is high, the backlight unit is suitable for a large-sized display device. Further, since the color purity of each color, RGB, is good, color reproducibility is excellent compared to when a cold-cathode tube is employed, and since disposal area can be reduced, if the backlight unit is adapted to a small-sized display device, a reduction in frame size can be achieved.

Further, the light source does not necessarily have to be disposed as the backlight unit shown in FIGS. 15A to 15D. For example, when a large-sized display device is equipped with a backlight having diodes, the diodes can be disposed on the back surface of a substrate. At that point, diodes of each color can be disposed in sequence, maintaining a prescribed distance between them. Color reproducibility can be improved according to the arrangement of the diodes.

By providing stacked polarizing plates in a display device employing such a backlight, images with high contrast ratio can be provided. In particular, the backlight having diodes is suitable for a large-sized display device, and by improving the contrast ratio of a large-sized display device, a high-quality image can be provided even in a dark place.

Embodiment Mode 5 In this embodiment mode, operation of each circuit and the like included in a liquid crystal display device will be explained.

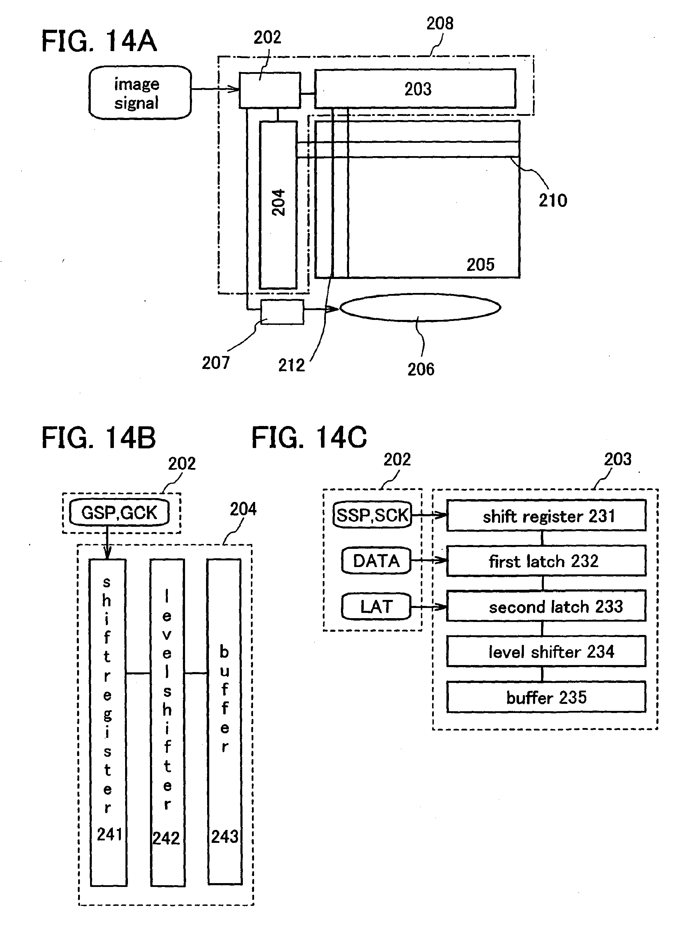

FIG. 14A shows a system block diagram of a pixel portion 205 and a driver circuit portion 208 of a liquid crystal display device.

The pixel portion 205 includes a plurality of pixels. At intersection regions of signal lines 212 and scanning lines 210, which form each pixel, switching elements are provided. Application of a voltage for controlling a tilt of liquid crystal molecules can be controlled by the switching element. A structure in which a switching element is provided at an intersection region is called an active matrix structure. A pixel portion of the invention is not limited to an active matrix such as this, and may have a passive type configuration. A passive matrix configuration does not have a switching element in each pixel, so the manufacturing process is simple.

The driver circuit portion 208 includes a control circuit 202, a signal line driver circuit 203, and a scanning line driver circuit 204. The control circuit 202 includes a function of conducting gray scale control according to the display content of the pixel portion 205. Therefore, the control circuit 202 inputs generated signals to the signal line driver circuit 203 and the scanning line driver circuit 204. Then, when a switching element is selected by the scanning line driver circuit 204 through the scanning line 210, a voltage is applied to a pixel electrode of the selected intersection region. The value of the voltage is determined based on a signal input from the signal line driver circuit 203 through the signal line 212.

In addition, in the control circuit 202, a signal which controls electrical power supplied to a lighting means 206 is generated, and is input to a power supply 207 of the lighting means 206. The backlight unit described in the preceding embodiment mode can be used as the lighting means. Further, a frontlight can be used as a lighting means instead of a backlight. A frontlight refers to a plate-like light unit that is fitted in front of a pixel portion and is formed from a light-emitting body which illuminates the whole screen and a light-guiding body. By using such a lighting means, a pixel portion can be illuminated evenly with low power consumption.

The scanning line driver circuit 204 shown in FIG. 14B includes a shift register 241, a level shifter 242, and a circuit that functions as a buffer 243. Signals such as a gate start pulse (GSP) and a gate clock signal (GCK) are input to the shift register 241. Note that the scanning line driver circuit of the invention is not limited to the configuration shown in FIG. 14B.

Further, as shown in FIG. 14C, the signal line driver circuit 203 includes a shift register 231, a first latch 232, a second latch 233, a level shifter 234, and a circuit that functions as a buffer 235. The circuit that functions as the buffer 235 is a circuit that has a function of amplifying weak signals, and includes an operational amplifier and the like. A signal such as a start pulse (SSP) is input to the level shifter 234, and data (DATA) such as a video signal is input to the first latch 232. Latch (LAT) signals can be held temporarily in the second latch 233, and input to the pixel portion 205 simultaneously. This is referred to as line sequential drive. Therefore, when a pixel conducts dot sequential drive rather than line sequential drive, it is not necessary to include the second latch. Thus, the signal line driver circuit of the invention is not limited to the configuration shown in FIG. 14C.

The signal line driver circuit 203, the scanning line driver circuit 204, and the pixel portion 205 can be formed from semiconductor elements provided over the same substrate. The semiconductor element can be formed using a thin film transistor provided on a glass substrate. In that case, a crystalline semiconductor film is preferably used as part of the semiconductor element (refer to Embodiment Mode 2). Since a crystalline semiconductor film has good electrical characteristics, in particular, high mobility, it can form a circuit included in a driver circuit portion. Further, the signal line driver circuit 203 and the scanning line driver circuit 204 can be mounted on the substrate using an IC (Integrated Circuit) chip. In that case, an amorphous semiconductor film can be used as part of the semiconductor element of the pixel portion (refer to Embodiment Mode 3).

By providing stacked polarizing plates in such a liquid crystal display device, contrast ratio can be improved. That is, the contrast ratio of the light from the lighting means that is controlled by the control circuit can be improved by the stacked polarizing plates.

Embodiment Mode 6 As driving methods for liquid crystals in liquid crystal display devices, there is a vertical electric field method in which voltage is applied perpendicular to a substrate, and a horizontal electric field method in which voltage is applied parallel to a substrate. The structure of the invention, in which stacked polarizing plates are provided, can be applied to either the vertical electric field method or to the horizontal electric field method. Specifically, the invention can be applied to a TN mode, a VA mode, an OCB mode, an IPS mode, or an STN mode. Therefore, in this embodiment mode, examples of various types of liquid crystal modes to which the stacked polarizing plates of the invention can be applied will be explained.

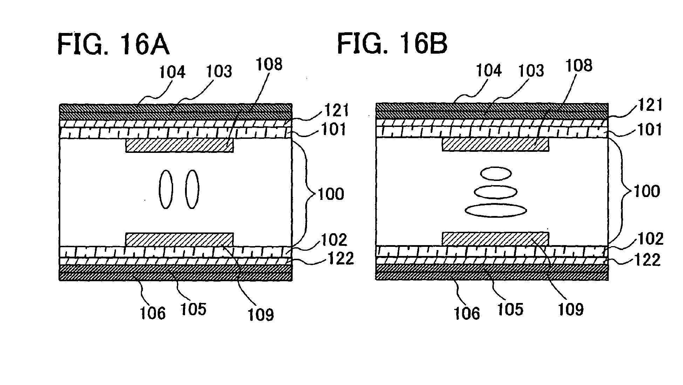

First, schematic diagrams of a TN mode liquid crystal display device are shown in FIGS. 16A and 16B.

A layer 100 having a liquid crystal element is sandwiched between a first light transmitting substrate 101 and a second light transmitting substrate 102 which are disposed so as to be opposite each other. On the first light transmitting substrate 101 side, a first retardation film 121, a first polarizing plate 103, and a second polarizing plate 104 are provided. Further, on the second light transmitting substrate 102 side, a second retardation film 122, a third polarizing plate 105, and a fourth polarizing plate 106 are provided. Stacked polarizing plates, that is, the first polarizing plate 103 and the second polarizing plate 104, are disposed so as to be in a parallel nicol arrangement. Further, stacked polarizing plates, that is, the third polarizing plate 105, and the fourth polarizing plate 106, are also disposed so as to be in a parallel nicol arrangement. Opposing polarizing plates, that is the first polarizing plate 103 or the second polarizing plate 104, and the third polarizing plate 105 or the fourth polarizing plate 106, are disposed such that they are in a crossed nicol arrangement with respect to each other. A first electrode 108 and a second electrode 109 are provided over the first light transmitting substrate 101 and the second light transmitting substrate 102, respectively. The first electrode 108 and the second electrode 109 have a light transmitting property.

In a liquid crystal display device with such a structure, in the case of normally white mode, when voltage is applied to the first electrode 108 and the second electrode 109 (this is called the vertical electric field method), black display is conducted, as shown in FIG. 16A. At this time, the liquid crystal molecules line up vertically. Then, light from the backlight cannot pass through the substrate, and black display results.

Then, as shown in FIG. 16B, when voltage is not applied between the first electrode 108 and the second electrode 109, white display results. At this time, the liquid crystal molecules line up horizontally, and twist within the plane. As a result, light from the backlight can pass through the substrate provided with the stacked polarizing plates, and display of a designated image can be conducted.

At this time, full color display can be conducted by the provision of a color filter. The color filter can be provided on either the first light transmitting substrate 101 side or on the second light transmitting substrate 102 side.

A known liquid crystal material may be used as a liquid crystal material for the TN mode.

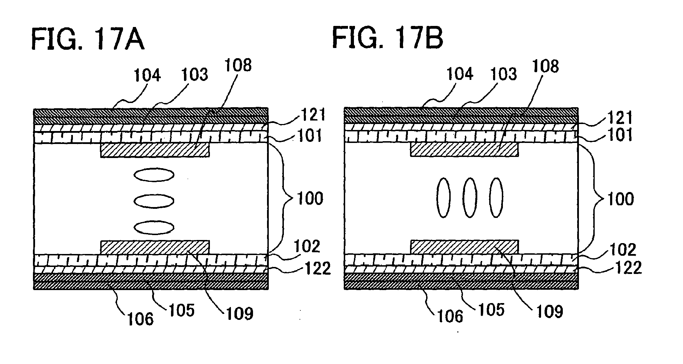

Next, FIGS. 17A and 17B show schematic diagrams of a VA mode liquid crystal display device. In VA mode, when there is no electric field, liquid crystals are oriented such that they are perpendicular to substrates.

Similarly to FIGS. 16A and 16B, on a first light transmitting substrate 101 side, a first retardation film 121, a first polarizing plate 103, and a second polarizing plate 104 are provided. Further, on the second light transmitting substrate 102 side, a second retardation film 122, a third polarizing plate 105, and a fourth polarizing plate 106 are provided. Stacked polarizing plates, that is, the first polarizing plate 103 and the second polarizing plate 104, are disposed so as to be in a parallel nicol arrangement. Further, stacked polarizing plates, that is, the third polarizing plate 105 and the fourth polarizing plate 106, are also disposed so as to be in a parallel nicol arrangement. Opposing polarizing plates, that is, the first polarizing plate 103 or the second polarizing plate 104, and the third polarizing plate 105 or the fourth polarizing plate 106, are disposed such that they are in a crossed nicol arrangement with respect to each other. A first electrode 108 and a second electrode 109 are provided over the first light transmitting substrate 101 and the second light transmitting substrate 102, respectively. The first electrode 108 and the second electrode 109 have a light transmitting property.

In a liquid crystal display device having such a structure, when voltage is applied to the first electrode 108 and the second electrode 109 (the vertical electric field method), an on-state in which white display is conducted results, as shown in FIG. 17A. At that time, the liquid crystal molecules line up horizontally. Then, light from the backlight can pass through the substrate provided with the stacked polarizing plates, and display of a prescribed image can be conducted. At this time, full color display can be conducted by the provision of a color filter. The color filter can be provided on either the first light transmitting substrate 101 side or on the second light transmitting substrate 102 side.

Then, as shown in FIG. 17B, when voltage is not applied between the first electrode 108 and the second electrode 109, black display, that is, an off-state, results. At this time, the liquid crystal molecules line up vertically. As a result, light from the backlight cannot pass through the substrate, and black display results.

In this manner, in the off-state, the liquid crystal molecules stand up perpendicular to the substrates and black display results, and in the on-state, the liquid crystal molecules fall parallel to the substrate, and white display results. In the off-state, since the liquid crystal molecules are standing up, polarized light from the backlight can pass through the cell without being affected by the liquid crystal molecules and can be completely blocked by the polarizing plates on the counter substrate side. Therefore, by providing the stacked polarizing plates, further improvement of the contrast ratio can be expected.

Further, the structure of the invention in which a retardation film and stacked polarizing plates are bonded together can also be applied to an MVA mode in which the orientation of liquid crystals varies from region to region.

A known liquid crystal material may be used as a liquid crystal material for the VA mode or the MVA mode.

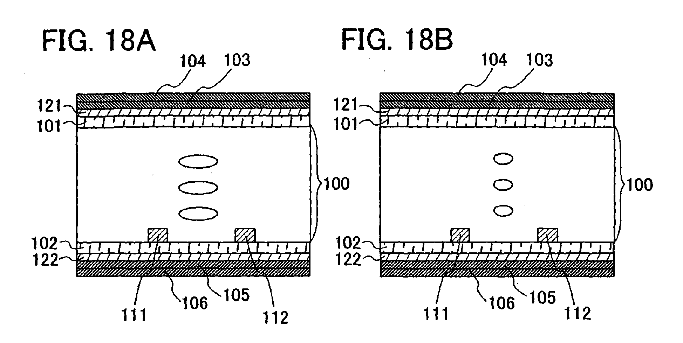

FIG 18A shows a form of an on-state of the IPS mode, which results in white display, and FIG. 18B shows a form of an off-state of the IPS mode, which results in black display. The IPS mode is characterized in that liquid crystals are controlled by a pair of electrodes which are provided on one substrate. Therefore, a pair of electrodes 111 and 112 are provided over the second substrate 102. Preferably, the pair of electrodes 111 and 112 each have a light transmitting property. The rest of the structure is shown using the same numerals as in FIGS. 16A and 16B and FIGS. 17A and 17B. Thus, the structure of the invention in which a retardation film and stacked polarizing plates are bonded together can also be applied to the IPS mode.

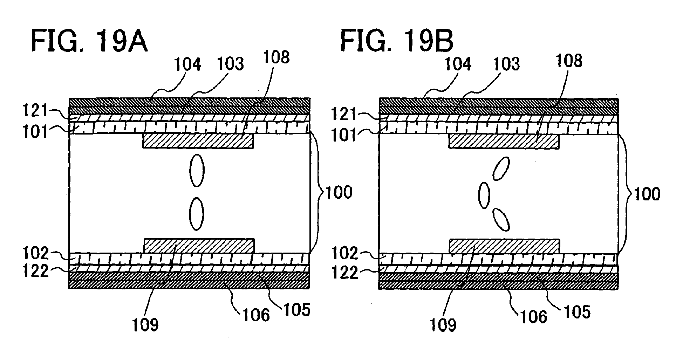

FIG 19A shows a form of an on-state of the OCB mode, which results in white display, and FIG. 19B shows a form of an off-state of the OCB mode, which results in black display. The OCB mode has a structure in which birefringence generated in the liquid crystal layer is optically compensated by the arrangement of liquid crystal molecules. This is called 'bend orientation'. A first electrode 108 and a second electrode 109 are provided over a first substrate 101 and a second substrate 102, respectively. Preferably, at least the electrode on the opposite side to the backlight, that is, on the display surface side, for example, the second electrode 109, is formed to have a light transmitting property. The rest of the structure is shown using the same numerals as in FIGS. 16A and 16B and FIGS. 17A and 17B. Thus, the structure of the invention in which a retardation film and stacked polarizing plates are bonded together can also be applied to the OCB mode.

### Embodiment 1

In this embodiment, optical calculations and the results thereof for a VA mode liquid crystal display device in which polarizing plates and retardation films are used will be explained.

First, using a liquid crystal optical calculation simulator LCD MASTER (made by Shintech Inc.), it will be shown that in a VA mode liquid crystal display device with retardation films inserted, the contrast ratio rises when stacked polarizing plates are used.

Optical calculations of transmittance with respect to wavelength were conducted using the LCD MASTER. The optical calculations were conducted with a 4 x 4 matrix optical calculation algorithm in which multiple interference due to the back and forth of reflected light between each element was taken into account. Calculations were conducted for light source wavelengths from 380 nm to 780 nm at 10 nm intervals.

Device structures of the measurement samples are shown in Table 1.

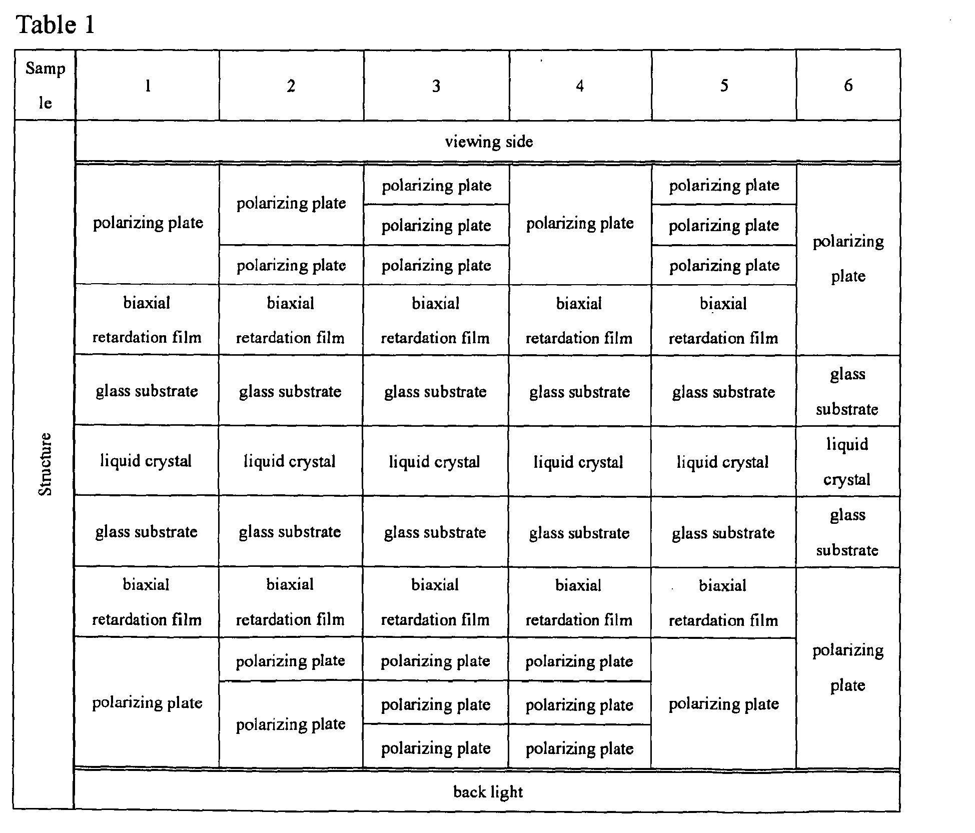

In Structures 1 to 5, liquid crystals were sandwiched between opposing glass substrates, biaxial retardation films of the same type were disposed on the outer sides of the opposing glass substrates, and further, polarizing plates were disposed on the outer sides of the biaxial retardation films. The number of polarizing plates differs in Structures 1 to 5. In Structure 1, one polarizing plate was disposed on the outer side of each retardation film. In Structure 2, two polarizing plates were stacked on the outer side of each retardation film. In Structure 3, three polarizing plates were stacked on the outer side of each retardation film. In Structure 4, one polarizing plate was disposed on the outer side of the retardation film on the viewing side, and three polarizing plates were stacked on the outer side of the retardation film on the backlight side. In Structure 5, three polarizing plates were stacked on the outer side of the retardation film on the viewing side, and one polarizing plate was disposed on the outer side of the retardation film on the backlight side. In Structure 6, liquid crystals were sandwiched between a pair of glass substrates, and only polarizing plates were disposed on the outer side of each glass substrate. The total number of polarizing plates in each structure is two in Structure 1, four in Structure 2, six in Structure 3, four in Structure 4, four in Structure 5, and two in Structure 6.

In Structures 1 to 6, the stacked polarizing plates were stacked such that their transmission axes were in a parallel nicol arrangement. Further, in Structures 1 to 6, the opposing polarizing plates were arranged such that their transmission axes were in a crossed nicol arrangement with respect to each other.

The transmittance in these measurement samples was calculated for looking at the liquid crystal display device front-on when a voltage of 0 V was applied to the liquid crystals (also referred to as 'dark state') and for looking at the liquid crystal display device front-on when a voltage of 7 V was applied to the liquid crystals (also referred to as 'bright state'). Contrast ratio was assumed to be the ratio of the transmittance at a voltage of 7 V and the transmission at a voltage of 0 V (transmittance at 7 V / transmittance at 0 V), and the contrast ratio was calculated for each wavelength.

The direction of the absorption axes of the polarizing plates was 45 degrees for the backlight side, and 135 degrees for the viewing side. For the liquid crystals, dielectric constant anisotropy Δε = -4.3, and birefringence Δn = 0.13 (590 nm). Cell thickness of the liquid crystals was 2.4 µm.

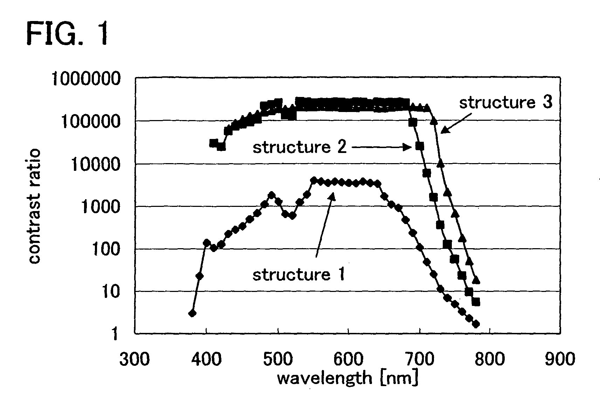

FIG 1 shows the results of the contrast ratio for Structures 1, 2, and 3, in which the number of polarizing plates on the outer sides of the opposing biaxial retardation films is equal (the total number of polarizing plates in Structures 1, 2, and 3 is two, four, and six, respectively). From FIG 1, it can be seen that the contrast ratio rises as the number of polarizing plates increases. Comparing Structure 1 with Structure 2, it can be seen that the contrast ratio for Structure 2 is higher across all wavelength regions. However, in Structure 3, in which the number of polarizing plates is further increased, the contrast ratio is almost the same as in Structure 2. That is to say, if the number of polarizing plates continues to be increased, the contrast ratio reaches a saturation point.

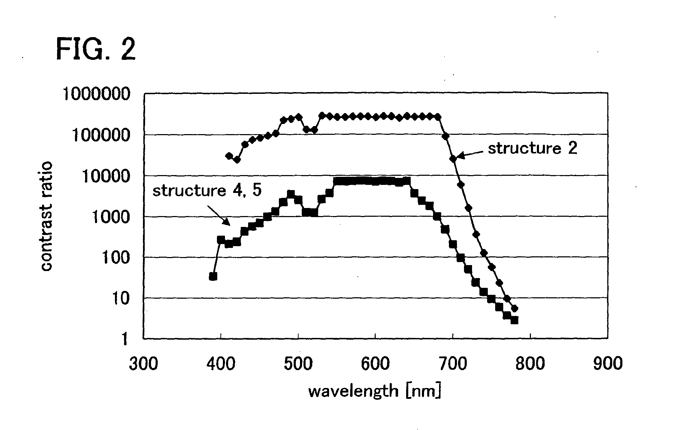

FIG. 2 compares Structure 2 with Structure 4 and Structure 5. The total number of polarizing plates in each structure is the same. Contrast ratios in all wavelength regions are shown for when a single polarizing plate is disposed on the viewing side or on the backlight side and for when a plurality of polarizing plates are disposed on both sides. Looking at Structure 4 and Structure 5, a difference in contrast ratio cannot be observed for when the number of polarizing plates on the viewing side is switched with the number of polarizing plates on the backlight side. However, it can be seen that in an arrangement such as Structure 2, the contrast ratio is higher than that of Structure 4 and Structure 5. From this, it can be seen that when polarizing plates are stacked on both sides, the contrast ratio rises.

Next, optical calculations concerning the viewing angle dependence of the contrast ratio (transmittance at 7 V / transmittance at 0 V) were conducted. As for the range of the viewing angle, calculations were conducted with an azimuth of 360° and a polar angle direction up to 80°. Further, in the optical calculations of the viewing angle, calculations were conducted with a 2 x 2 matrix optical calculation algorithm in which multiple interference between each element was not taken into account, and light source wavelength was fixed at 550 nm. Calculations were conducted for regions where the contrast ratio was 150 or more and for regions where the contrast ratio was less than 10.

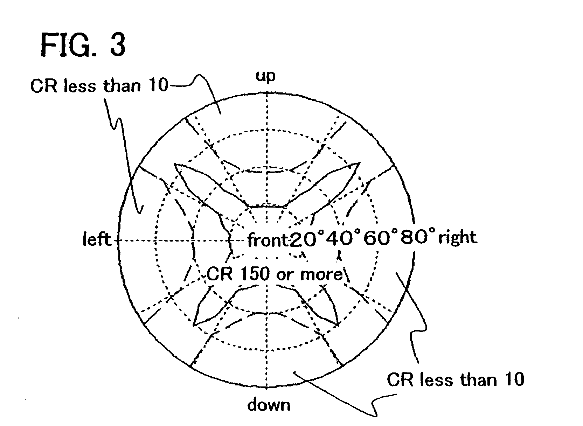

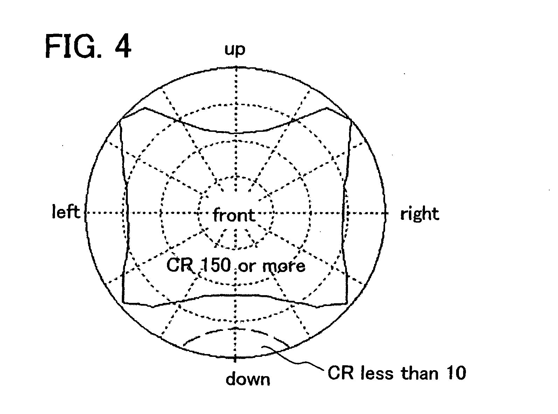

FIG. 3 shows viewing angle dependence of the contrast ratio (denoted as 'CR' in the drawings) for Structure 6, in which one polarizing plate was put on the backlight side and one polarizing plate was put on the viewing side, and a biaxial retardation film was not included. Further, FIG. 4 shows viewing angle dependence of the contrast ratio for Structure 1, which is Structure 6 with biaxial retardation films added. Comparing viewing angle dependence of the contrast ratio in FIG. 3 and FIG. 4, it can be seen that for Structure 1, which includes biaxial retardation films, the region in which the contrast ratio is less than 10 (denoted as 'CR less than 10' in the drawings) is narrower, and the region in which the contrast ratio is 150 or more (denoted as 'CR 150 or more' in the FIGS.) is wider. That is, it can be said that by adding biaxial retardation films, the viewing angle is improved.

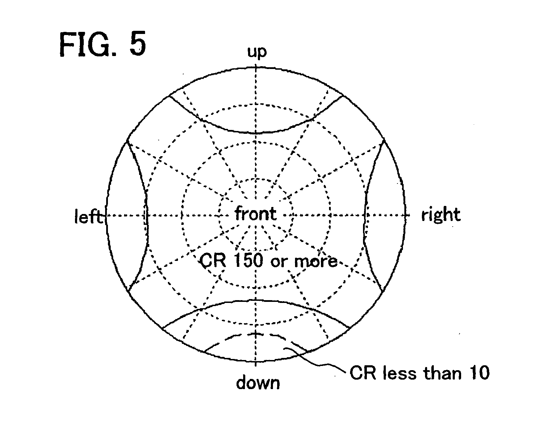

FIG. 5 shows the results of optical calculations conducted for Structure 2, in which two polarizing plates were put on the viewing side and two polarizing plates were put on the backlight side. Comparing the viewing angle dependence of the contrast ratio for FIG. 5 and FIG. 4, it can be seen that increasing the number of polarizing plates does not cause a problem with the viewing angle. Rather, in Structure 2, which includes the stacked polarizing plates, the region where the contrast ratio is 150 or more is wider at the azimuthal angles of 45 degrees, 135 degrees, 225 degrees, and 315 degrees, which are the directions of the absorption axes of the polarizing plates. That is, it can be seen that the stacked polarizing plates also contribute to improvement of the viewing angle.

Thus, it can be seen that by inserting a plurality of polarizing plates in a VA mode liquid crystal device in which the viewing angle has been widened by the insertion of biaxial retardation plates, the contrast ratio improves and the viewing angle can be further widened. Further, when the number of polarizing plates on both the backlight side and the viewing side is two or more, the contrast ratio is greatly improved.

### Embodiment 2

In this embodiment, optical calculations and the results thereof for a TN mode liquid crystal display device using polarizing plates and retardation films are explained.

As a retardation film, a film in which discotic liquid crystals were hybrid aligned and bonded to a TAC film was prepared. As in the preceding embodiment, it was shown using a simulator that when stacked polarizing plates are used in a TN mode liquid crystal display device in which such retardation films are inserted, the contrast ratio rises.

Device structures of the measurement samples are shown in Table 2. In Table 2, the film having a hybrid oriented liquid crystal is referred to as simply a 'film'.

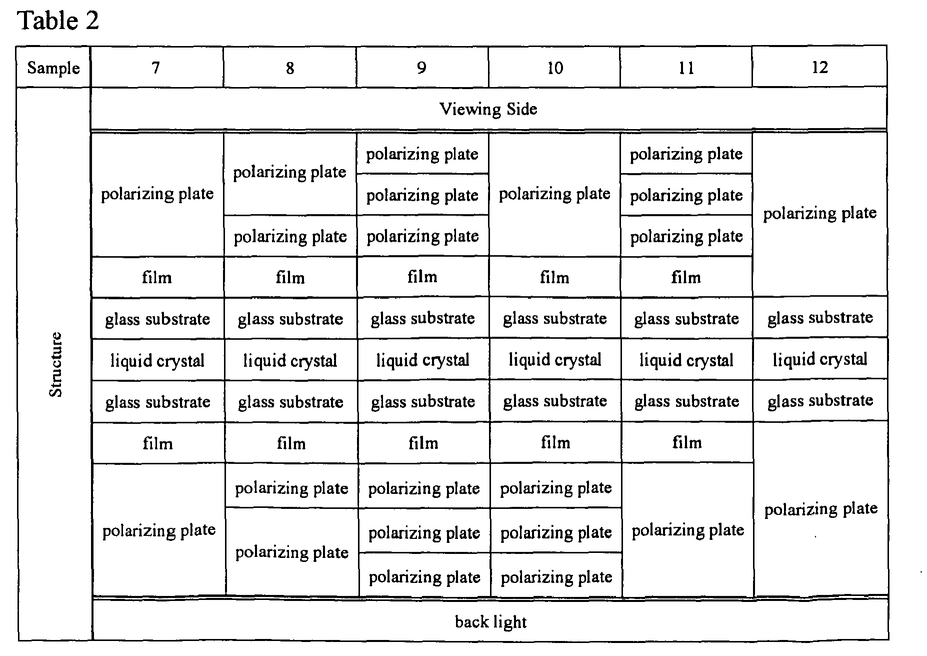

In Structures 7 to 11, films having hybrid oriented liquid crystals were disposed on the outer sides of opposing glass substrates which sandwiched liquid crystals of the same type. Further, on the outer sides of the films having hybrid oriented liquid crystals, polarizing plates were disposed. The number of polarizing plates differs in Structures 7 to 11. In Structure 7, one polarizing plate was disposed on the outer side of each film having hybrid oriented liquid crystal, in Structure 8 two polarizing plates were disposed on the outer side of each film, and in Structure 9 three polarizing plates were disposed on the outer side of each film. In Structure 10, one polarizing plate was disposed on the viewing side and three polarizing plates were disposed on the backlight side. In Structure 11, three polarizing plates were disposed on the viewing side and one polarizing plate was disposed on the backlight side. Further, in Structure 12, only polarizing plates were disposed on the outer sides of the opposing glass substrates which sandwiched the liquid crystals. The total number of polarizing plates in each structure is two for Structure 7, four for Structure 8, six for Structure 9, four for Structure 10, four for Structure 11, and two for Structure 12.

Note that the films having hybrid oriented liquid crystals and the polarizing plates were bonded together, and the polarizing plates were stacked such that their transmission axes were in a parallel nicol arrangement. Further, the films having the hybrid oriented liquid crystals and the polarizing plates were bonded such that the absorption axes of the polarizing plates and the falling direction of the pretilt angle of the discotic liquid crystals were parallel when seen from directly above.

In Structures 7 to 12, the stacked polarizing plates were stacked such that their transmission axes were in a parallel nicol arrangement. Further, in Structures 7 to 12, opposing polarizing plates were disposed such that their transmission axes were in a crossed nicol arrangement.

The transmittance in these measurement samples was calculated for looking at the liquid crystal display device front-on when a voltage of 0 V was applied to the liquid crystals (also referred to as 'bright state') and when a voltage of 7 V (also referred to as 'dark state') was applied to the liquid crystals. Contrast ratio was assumed to be the ratio of the transmittance for when 0 V was applied and the transmittance for when 7 V was applied (transmittance at 0 V / transmittance at 7 V), and the contrast ratio was calculated for each wavelength.

The direction of the absorption axes of the polarizing plates was 135 degrees on the backlight side and 45 degrees on the viewing side. Rubbing direction on the backlight side and on the viewing side was the same as the direction of the absorption axes of the polarizing plates, so as to obtain a liquid crystal display of a normally white mode. For the liquid crystals, dielectric constant anisotropy Δε = 5.2 and birefringence Δn = 0.097 (590 nm). Cell thickness of the liquid crystals was 4.0 µm.

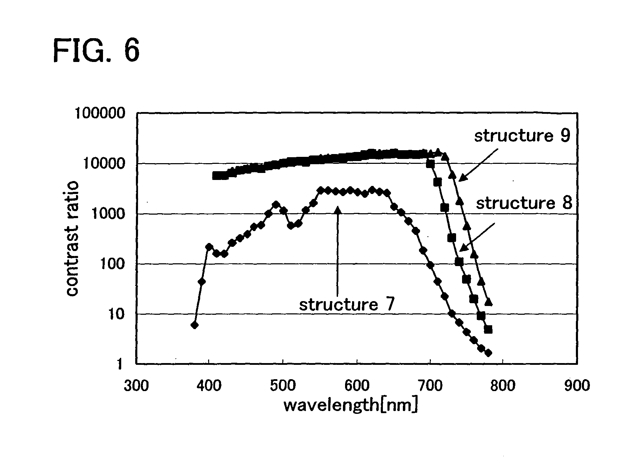

FIG. 6 shows contrast ratio results for Structures 7, 8 and 9, in which the number of polarizing plates on the outer sides of the opposing films having hybrid oriented liquid crystal is equal (the total number of polarizing plates in Structures 7, 8 and 9 is two, four and six, respectively). From FIG. 6, it can be seen that in TN mode as well, the contrast ratio rises as the number of polarizing plates increases. Comparing Structure 7 and Structure 8, it can be seen that the contrast ratio for Structure 8 is higher across all wavelength regions. This shows that when the same number of polarizing plates are stacked on the backlight side and on the viewing side, increasing the number of plates on each side causes the contrast ratio to rise. However, for Structure 9, in which the number of polarizing plates is further increased, the contrast ratio is almost the same as for Structure 8. That is, if the number of polarizing plates continues to be increased, the contrast ratio reaches a saturation point. This is the same for both the TN mode and the VA mode.

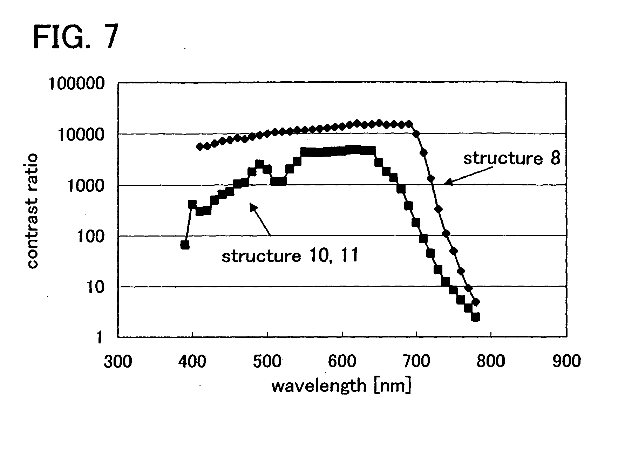

FIG. 7 compares Structure 8 with Structure 10 and Structure 11. The total number of polarizing plates in each structure is the same. Contrast ratios in all wavelength regions are shown for when only one polarizing plate is disposed on the viewing side or on the backlight side, and for when a plurality of polarizing plates are disposed on both sides. Looking at Structure 10 and Structure 11, a difference in contrast ratio cannot be observed for when the number of polarizing plates on the viewing side is switched with the number of polarizing plates on the backlight side. However, it can be seen that in an arrangement such as Structure 8, the contrast ratio is higher than that of Structure 10 and Structure 11. From this, it can be seen that in TN mode as well, when polarizing plates are stacked on both sides, the contrast ratio rises.

Next, optical calculations concerning the viewing angle dependence of the contrast ratio (transmittance at 0 V / transmittance at 5 V) were conducted. The range of the viewing angle was the same as in Embodiment 1. Calculations were conducted with an azimuth of 360° and a polar angle direction up to 80°. Calculations were conducted for regions where the contrast ratio was 150 or more and for regions where the contrast ratio was less than 10.

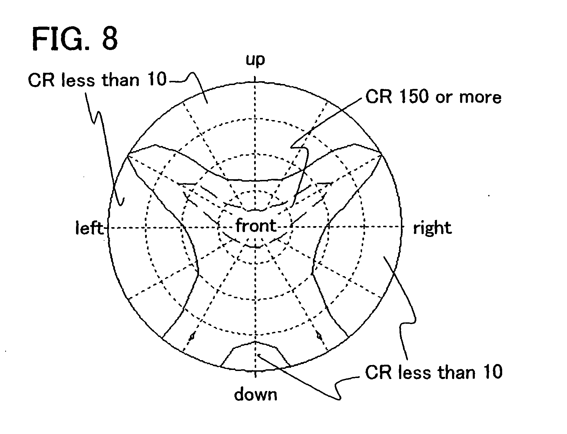

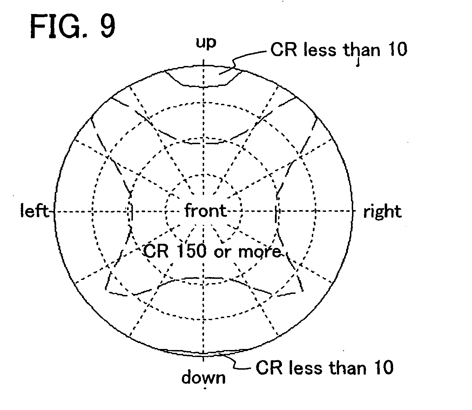

FIG 8 shows the results of the viewing angle dependence of the contrast ratio for when Structure 12 is used. Structure 12 includes one polarizing plate on the viewing angle side and one polarizing plate on the backlight side, and does not include a film having hybrid oriented liquid crystal. Further, in FIG. 9, the viewing angle dependence of the contrast ratio for Structure 7 is shown. Structure 7 is Structure 12 with films having hybrid oriented liquid crystals being added. Comparing the viewing angle dependence of the contrast ratios in FIG. 8 and FIG. 9, it can be seen that in the distribution of the contrast ratio of Structure 7, which includes films having hybrid oriented liquid crystals, the 'contrast ratio less than 10' region is narrower, and the 'contrast ratio 150 or more' region is wider. It other words, it can be said that the viewing angle is improved by the inclusion of the films having hybrid oriented liquid crystals.

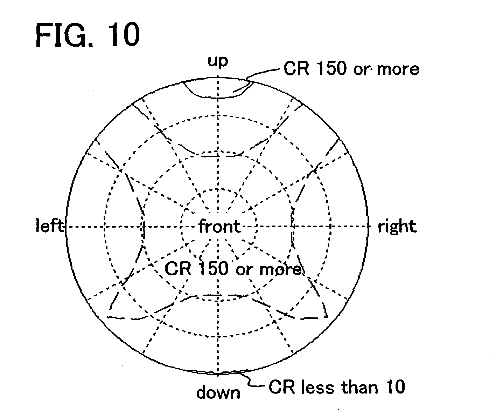

In FIG. 10, the results of optical calculations conducted for Structure 8 are shown. Structure 8 includes two polarizing plates on the backlight side and two polarizing plates on the viewing side. Comparing FIG. 10 with FIG. 9, it can be seen that by increasing the number of polarizing plates, the viewing angle in the direction of the absorption axes of the polarizing plates is improved.

Thus, it can be seen that also in a TN mode liquid crystal display device in which the viewing angle has been widened by the insertion of films having hybrid oriented liquid crystals, by inserting a plurality of polarizing plates, the viewing angle can be widened further, and this contributes to improvement of the contrast ratio. Further, it can be seen that when the number of polarizing plates on the backlight side and on the viewing side is two or more each, the contrast ratio improves significantly.
This application is based on Japanese Patent Application serial no. 2005-351351 filed in Japan Patent Office on 5th December, 2005, the entire contents of which are hereby incorporated by reference.

## Claims

1. A liquid crystal display device comprising:
a first light transmitting substrate;
a second light transmitting substrate opposed to the first light transmitting substrate;
a liquid crystal material interposed between the first light transmitting substrate and the second light transmitting substrate; and
a retardation film and stacked polarizing plates disposed on an outer side of the first light transmitting substrate such that the retardation film is located between the first light transmitting substrate and the stacked polarizing plates,
wherein the stacked polarizing plates are disposed such that their absorption axes are in a parallel nicol arrangement.

2. The liquid crystal display device according to claim 1 wherein the stacked polarizing plates has two polarizing plates.

3. The liquid crystal display device according to claim 1, wherein the retardation film is selected from the group consisting of a film comprising liquid crystal with a hybrid orientation, a film comprising liquid crystal with a twisted orientation, a uniaxial retardation film, and a biaxial retardation film.

4. The liquid crystal display device according to claim 1, wherein:
the first light transmitting substrate includes a first electrode,
the second light transmitting substrate includes a second electrode, and
the display device conducts white display when a voltage is applied between the first electrode and the second electrode, and conducts black display when a voltage is not applied between the first electrode and the second electrode.

5. The liquid crystal display device according to claim 1, wherein:
the first light transmitting substrate includes a first electrode,
the second light transmitting substrate includes a second electrode, and
the display device conducts white display when a voltage is not applied between the first electrode and the second electrode, and conducts black display when a voltage is applied between the first electrode and the second electrode.

6. A liquid crystal display device comprising:
a first light transmitting substrate;
a second light transmitting substrate opposed to the first light transmitting substrate;
a liquid crystal material interposed between the first light transmitting substrate and the second light transmitting substrate;
a first retardation film and first stacked polarizing plates disposed on an outer side of the first light transmitting substrate such that the first retardation film is located between the first light transmitting substrate and the first stacked polarizing plates; and
a second retardation film and a second polarizing plate disposed on an outer side of the second light transmitting substrate such that the second retardation film is located between the second light transmitting substrate and the second polarizing plates,
wherein the first stacked polarizing plates are disposed such that their absorption axes are in a parallel nicol arrangement.

7. The liquid crystal display device according to claim 6 wherein the first stacked polarizing plates have two polarizing plates.

8. The liquid crystal display device according to claim 6, wherein each of the first and second retardation films is selected from the group consisting of a film comprising liquid crystal with a hybrid orientation, a film comprising liquid crystal with a twisted orientation, a uniaxial retardation film, and a biaxial retardation film.

9. The liquid crystal display device according to claim 6, wherein:
the first light transmitting substrate includes a first electrode,
the second light transmitting substrate includes a second electrode, and
the display device conducts white display when a voltage is applied between the first electrode and the second electrode, and conducts black display when a voltage is not applied between the first electrode and the second electrode.

10. The liquid crystal display device according to claim 6, wherein:
the first light transmitting substrate includes a first electrode,
the second light transmitting substrate includes a second electrode, and
the display device conducts white display when a voltage is not applied between the first electrode and the second electrode, and conducts black display when a voltage is applied between the first electrode and the second electrode.

11. A liquid crystal display device comprising:
a first light transmitting substrate;
a second light transmitting substrate opposed to the first substrate;
a liquid crystal material interposed between the first light transmitting substrate and the second light transmitting substrate;
a first retardation film and first stacked polarizing plates disposed on an outer side of the first light transmitting substrate such that the first retardation film is located between the first light transmitting substrate and the first stacked polarizing plates; and
a second retardation film and second stacked polarizing plates disposed on an outer side of the second light transmitting substrate such that the second retardation film is located between the second light transmitting substrate and the second stacked polarizing plates,
wherein the first stacked polarizing plates are disposed such that their absorption axes are in a parallel nicol arrangement and the second stacked polarizing plates are disposed such that their absorption axes are in a parallel nicol arrangement; and
the absorption axes of the first stacked polarizing plates disposed are in a cross nicol arrangement with respect to the absorption axes of the second stacked polarizing plates.

12. The liquid crystal display device according to claim 11 wherein each of the first stacked polarizing plates the second polarizing plates has two polarizing plates.

13. The liquid crystal display device according to claim 11, wherein each of the first and second retardation films is selected from the group consisting of a film comprising liquid crystal with a hybrid orientation, a film comprising liquid crystal with a twisted orientation, a uniaxial retardation film, and a biaxial retardation film.

14. The liquid crystal display device according to claim 11, wherein:
the first light transmitting substrate includes a first electrode,
the second light transmitting substrate includes a second electrode, and
the display device conducts white display when a voltage is applied between the first electrode and the second electrode, and conducts black display when a voltage is not applied between the first electrode and the second electrode.

15. The liquid crystal display device according to claim 11, wherein:
the first light transmitting substrate includes a first electrode,
the second light transmitting substrate includes a second electrode, and
the display device conducts white display when a voltage is not applied between the first electrode and the second electrode, and conducts black display when a voltage is applied between the first electrode and the second electrode.

16. A liquid crystal display device comprising:
a first light transmitting substrate;
a second light transmitting substrate opposed to the first substrate;
a liquid crystal material interposed between the first light transmitting substrate and the second light transmitting substrate;
a first retardation film and first stacked polarizing plates disposed on an outer side of the first light transmitting substrate wherein the first retardation film is located between the first light transmitting substrate and the first stacked polarizing plates;
a second retardation film and second stacked polarizing plates disposed on an outer side of the second light transmitting substrate wherein the second retardation film is located between the second light transmitting substrate and the second stacked polarizing plates; and
a color filter disposed on an inner side of at least one of the first light transmitting substrate and the second light transmitting substrate,
wherein the first stacked polarizing plates are disposed such that their absorption axes are in a parallel nicol arrangement and the second stacked polarizing plates are disposed such that their absorption axes are in a parallel nicol arrangement; and
the absorption axes of the first stacked polarizing plates are in a cross nicol arrangement with respect to the absorption axes of the second stacked polarizing plates.

17. The liquid crystal display device according to claim 16, wherein each of the first stacked polarizing plates and the second stacked polarizing plates has two polarizing plates.

18. The liquid crystal display device according to claim 16, wherein each of the first and second retardation films is selected from the group consisting of a film comprising liquid crystal with a hybrid orientation, a film comprising liquid crystal with a twisted orientation, a uniaxial retardation film, and a biaxial retardation film.

19. The liquid crystal display device according to claim 16, wherein:
the first light transmitting substrate includes a first electrode,
the second light transmitting substrate includes a second electrode, and
the display device conducts white display when a voltage is applied between the first electrode and the second electrode, and conducts black display when a voltage is not applied between the first electrode and the second electrode.

20. The liquid crystal display device according to claim 16, wherein:
the first light transmitting substrate includes a first electrode,
the second light transmitting substrate includes a second electrode, and
the display device conducts white display when a voltage is not applied between the first electrode and the second electrode, and conducts black display when a voltage is applied between the first electrode and the second electrode.

21. A display device comprising:
a first substrate and a second substrate opposed to each other;
a display element interposed between the first and second substrates;
a first retardation film and first stacked polarizing plates disposed on an outer side of the first substrate such that the first retardation film is located between the first substrate and the first stacked polarizing plates; and
a second retardation film and a second polarizing plate disposed on an outer side of the second substrate such that the second retardation film is located between the second substrate and the second stacked polarizing plates,
wherein the first stacked polarizing plates are disposed such that their absorption axes are in a parallel nicol arrangement and the second stacked polarizing plates are disposed such that their absorption axes are in a parallel nicol arrangement, and
the absorption axes of the first stacked polarizing plates are in a cross nicol arrangement with respect to the absorption axes of the second stacked polarizing plates.

22. The display device according to claim 21 wherein the display element is a liquid crystal element.
